# EUROPÄISCHE PATENTSCHRIFT

(11) **EP 2 631 382 B1**
(45) Veröffentlichungstag und Bekanntmachung des Hinweises auf die Patenterteilung: **22.06.2016**
(21) Anmeldenummer: 13156278.7
(22) Anmeldetag: 22.02.2013
(51) Int. Cl.: E04D 13/12, E04G 21/30, E04D 15/00, F24J 2/46

(54) **Tritt- und Arbeitsplattform**
Step and work platform
Plateforme de travail et de marche

(30) Priorität: 23.02.2012 DE 202012001759 U
(43) Veröffentlichungstag der Anmeldung: 28.08.2013
(73) Patentinhaber: Heidbüchel, Sven, 52388 Nörvenich (DE)
(72) Erfinder: Heidbüchel, Sven, 52388 Nörvenich (DE)
(74) Vertreter: Prinz & Partner mbB

(56) Entgegenhaltungen:
- JP-A- H10 266 498
- US-A1- 2003 037 990
- US-A1- 2003 230 451
- US-A1- 2006 016 637
- US-B1- 6 216 819

## Beschreibung

### Technisches Gebiet

Die Erfindung betrifft eine Tritt- und Arbeitsplattform zur Auflage auf zumindest ein in einem schrägen Winkel montiertes Solarmodul einer Solaranlage.

### Technischer Hintergrund

Eine Solaranlage besteht in der Regel aus einer Vielzahl einzelner Solarmodule, welche zu einer großen Fläche, z. B. auf einem Dach eines Gebäudes zusammengesetzt sind. Im Folgenden sollen sowohl Photovoltaikanlagen als auch solarthermische Anlagen allgemein als Solaranlage bezeichnet werden. Die einzelnen Solarmodule weisen an ihrer Oberfläche eine Glasscheibe oder dergleichen auf oder haben zumindest eine lichtdurchlässige Deckschicht. Die Oberfläche solcher Solarmodule ist vergleichsweise empfindlich und sollte aus diesem Grund weder bei der Montage noch bei der Wartung der Solaranlage betreten werden.

Eine Solaranlage ist jedoch der Witterung ausgesetzt. Im Laufe der Zeit lagern sich z. B. Schwebstoffe oder dergleichen auf der Oberfläche der Solarmodule ab. Da aufgrund dieser Verschmutzung von der nutzbaren Sonnenenergie ein Teil absorbiert oder reflektiert wird, sinkt der Wirkungsgrad der Solaranlage im Laufe der Zeit. Um einer solchen Verringerung des Wirkungsgrades entgegen zu wirken, sollte die Oberfläche der Solarmodule von Zeit zu Zeit gereinigt werden. Eine solche Reinigung ist jedoch mit gewissen technischen Hindernissen behaftet, da sich Solaranlagen in der Regel an schlecht zugänglichen Orten wie z. B. Gebäudedächern befinden. Außerdem sind aufgrund der großen Fläche der Solaranlage zumindest die in einem Innenbereich dieser Fläche liegenden Solarmodule schwer zugänglich. Schließlich muss die Reinigung der Solarmodule mit großer Vorsicht durchgeführt werden, da bereits feine Kratzer in deren Oberfläche eine Verringerung des Wirkungsgrades zur Folge haben.

Zur Reinigung von Solaranlagen, welche auf Gebäudedächern montiert sind, schlägt die DE 10 2009 054 160 A1 eine aufwendige mobile Reinigungsanlage mit einem Auslegersystem vor. Ausgehend von einer am Boden aufgestellten Basis reicht ein aus mehreren Segmenten bestehender Ausleger bis zu einer auf einem Dach installierten Solaranlage. Am Kopf des Auslegers befindet sich eine Bürsteneinheit, welche zur Reinigung der Solarmodule eingesetzt wird. Auch bei Einsatz eines großen Auslegers besitzt eine solche Anlage dennoch eine begrenzte Reichweite und kann bei sehr großen Solaranlage oder hohen Gebäuden schnell an ihre technischen Grenzen stoßen. Außerdem bedeutet der Einsatz einer solchen Reinigungsanlage für den Betreiber der Solaranlage einen nicht geringen Kostenfaktor.

Eine weitere Notwendigkeit, sich Zugang zu einzelnen Solarmodulen einer Solaranlage zu verschaffen, kann beim Austausch von fehlerhaften und defekten Solarmodulen im Rahmen von Wartungsarbeiten entstehen. In einem solchen Fall ist es in der Regel nicht zu vermeiden, dass ein Monteur die Solaranlage betritt. Auch bei größter Vorsicht besteht bei solchen Arbeiten stets die Gefahr, einzelne Solarmodule zu beschädigen.

Weitere Arbeits- und Trittplattformen sind aus der JP-410 266498 A, der US 2003/037990 A1, der US 2003/230451 A1, der WO 99/03367 A1, der US 2006/016637 A1 bekannt.

JP-410 266498 offenbart eine Tritt-und Arbeitsplattform gemäß dem Oberbegriff des Anspruchs 1.

### Zusammenfassung

Es ist eine Aufgabe der vorliegenden Erfindung, eine Tritt- und Arbeitsplattform anzugeben, welche einen einfachen und effizienten Zugang zu einer Solaranlagen gestattet.

Die Aufgabe wird durch den Gegenstand des Anspruchs 1 gelöst.

Gemäß der Erfindung wird eine Tritt- und Arbeitsplattform zur Auflage auf zumindest ein in einem schrägen Winkel montiertes Solarmodul einer Solaranlage angegeben. Vorzugsweise handelt es sich bei der Solaranlage um eine Photovoltaikanlage. Die Tritt- und Arbeitsplattform kann jedoch ebenfalls für solarthermische Anlagen, welche aus einzelnen flachen Solarmodulen aufgebaut sind, eingesetzt werden. Die Tritt- und Arbeitsplattform umfasst eine Grundplatte und eine daran angebrachte Arretierung zur Sicherung der Tritt- und Arbeitsplattform gegenüber dem Solarmodul. Die Arretierung erstreckt sich entlang einer Kante der Grundplatte und weist eine Anschlagfläche auf. Diese Anschlagfläche ragt aus einer von der Grundplatte der Tritt- und Arbeitsplattform aufgespannten Ebene heraus. Die Anschlagfläche ist dafür vorgesehen, mit einer obenliegenden Kante des in einem schrägen Winkel montierten Solarmoduls kraft- und formschlüssig zum Anschlag zu kommen.

Vorteilhaft kann die Tritt- und Arbeitsplattform gemäß Aspekten der Erfindung auf ein Solarmodul einer Solaranlage aufgesetzt werden, wobei die bei Betreten der Tritt- und Arbeitsplattform auftretenden mechanischen Belastungen großflächig auf das darunterliegende Solarmodul verteilt werden. Das Risiko das Solarmodul zu beschädigen, kann so minimiert werden. Die einzelnen Solarmodule großflächiger Solaranlagen sind unter Freilassung eines Spaltes zwischen den einzelnen Solarmodulen montiert, um eine thermische Ausdehnung der Solarmodule zu ermöglichen. Die Breite dieses Spaltes ist durch die thermische Ausdehnung der Solarmodule bei Erwärmung vorgegeben. Bevorzugt greift die Arretierung von der Oberseite der Solarmodule her in diesen Spalt. Da die Anschlagfläche der Arretierung kraft- und formschlüssig an einer dem Spalt benachbarten, oberen Kante des betreffenden Solarmoduls anschlägt, kann ein Abrutschen der Tritt- und Arbeitsplattform wirksam vermieden werden.

Diese Anschlagfläche erstreckt sich bevorzugt in Richtung einer Unterseite der Tritt- und Arbeitsplattform aus einer von der Grundplatte aufgespannten Ebene heraus. Weiterhin bevorzugt ist die Anschlagfläche im Wesentlichen senkrecht zu der Grundplatte orientiert. Dies erlaubt eine einfache Handhabung der Tritt- und Arbeitsplattform, welche mit wenigen Handgriffen auf ein Solarmodul aufgesetzt oder von diesem abgehoben werden kann.

Durch Verwendung mehrerer Tritt- und Arbeitsplattformen, es werden mindestens zwei Tritt- und Arbeitsplattformen benötigt, ist die gesamte Fläche der Solaranlage problemlos zugänglich, indem eine erste Tritt- und Arbeitsplattform als Standfläche dient, während eine zweite Tritt- und Arbeitsplattform von einem vorherigen auf ein nächstes Solarmodul umgesetzt wird. Durch Umsteigen von einer Tritt- und Arbeitsplattform zur nächsten und entsprechendes Umsetzen der Tritt- und Arbeitsplattformen, kann ein Servicetechniker oder einer Reinigungskraft problemlos jeden beliebigen Punkt einer Solaranlage erreichen. Auf den Einsatz aufwendiger und kostspieliger Krananlagen kann vorteilhaft verzichtet werden.

Gemäß einem vorteilhaften Aspekt der Erfindung weist die Tritt- und Arbeitsplattform auf zumindest einer der Flachseiten der Grundplatte zumindest abschnittsweise, bevorzugt vollflächig, eine.elastische Schicht auf. Bevorzugt ist die elastische Schicht auf der von einer Flachseite der Grundplatte gebildeten Unterseite der Tritt- und Arbeitsplattform angebracht. Mit Hilfe der elastischen Schicht kann das Risiko für eine Beschädigung der Oberfläche der Solarmodule weiter minimiert werden. Außerdem verhindert die zwischen der elastischen Schicht und der Oberfläche der Solarmodule vorhandene Haftreibung zusätzlich ein Abrutschen der Tritt- und Arbeitsplattform. Als besonders geeignetes Material für die elastische Schicht konnte Moosgummi gefunden werden. Es hat sich herausgestellt, dass eine auf die Grundplatte aufgeklebte Schicht aus Moosgummi, z. B. ein Moosgummibelag aus Zellkautschuk ZK100, besonders geeignet ist.

Als Arretierung wird eine sich zumindest abschnittsweise entlang der Kante der Grundplatte erstreckende Profilschiene verwendet. Als Material für die Profilschiene ist beispielsweise Aluminium aber auch Kunststoff geeignet. Bevorzugt ist diese Profilschiene in zumindest eine der Flachseiten der Grundplatte eingelassen. Durch Einlassen der Profilschiene in die Grundplatte können hervorstehende Kanten vermieden werden, was das Beschädigungsrisiko für die Solarmodule und das Verletzungsrisiko für den Benutzer minimiert.

Die Profilschiene weist, betrachtet in einem senkrecht zu der oberen Kante orientierten Querschnitt, ein F-Profil auf. Dieses F-Profil weist einen U-förmigen Bereich zur Aufnahme der Grundplatte auf. Die Grundplatte erstreckt sich also in diesen U-förmigen Bereich des F-Profils hinein und ist in diesem Bereich mit der Profilschiene beispielsweise durch Schrauben verbunden. Die F-Profilschiene weist außerdem einen quer zu den Flachseiten der Grundplatte orientierten Schenkel auf, durch welchen die Anschlagfläche gebildet ist. Bevorzugt ist diese Anschlagfläche senkrecht zu den Flachseiten der Grundplatte orientiert, wobei auch in diesem Zusammenhang ein senkrecht zu der oberen Kante orientierter Querschnitt betrachtet wird.

Als Material für die Grundplatte ist eine Hartschaumplatte besonders geeignet. Solche Materialien sind leicht und halten hohen Belastungen stand. Bevorzugt wird eine glasfaserverstärkte Polyurethan-Hartschaumplatte verwendet. Dieses Material ist belastbar und gleichzeitig leicht genug, sodass die Tritt- und Arbeitsplattform problemlos in ihrer Handhabung ist. Außerdem ist dieses Material UV-beständig und wasserfest und somit für den Außeneinsatz, insbesondere bei Reinigungsarbeiten der Solarmodule, besonders geeignet.

Gemäß einem weiteren Ausführungsbeispiel ist die Tritt- und Arbeitsplattform in einer Längsrichtung größer als in einer quer (bevorzugt im Wesentlichen senkrecht) dazu orientierten Querrichtung. Die Arretierung der Tritt- und Arbeitsplattform erstreckt sich bei diesem Ausführungsbeispiel entlang einer in Querrichtung verlaufenden Kante der Grundplatte. In Aufsicht ist die Grundplatte rechteckig, was bei Verwendung mehrerer Tritt- und Arbeitsplattformen, die während des Arbeitsvorganges versetzt werden, besonders vorteilhaft ist. Aufgrund der länglichen Gestalt der Tritt- und Arbeitsplattform kann eine bisher verwendete weitere Tritt- und Arbeitsplattform in einem unteren Bereich der aktuell verwendeten Tritt- und Arbeitsplattform aufgenommen werden und an deren oberem Ende auf ein weiteres Solarmodul aufsetzen werden. Da die Tritt- und Arbeitsplattform in Längsrichtung groß ist, kann ein großer Arbeitsweg auf einer einzelnen Tritt- und Arbeitsplattform zurückgelegt werden, was den Arbeitsvorgang effizient gestaltet.

Gemäß einem weiteren Aspekt der Erfindung ist eine Flachseite der Grundplatte, welche nicht mit einer elastischen Schicht versehen ist, zumindest abschnittsweise, bevorzugt vollflächig, mit einer rutschfesten Schicht versehen. Eine solche rutschfeste Oberfläche vermindert die Absturzgefährdung auch bei Nässe deutlich. Bevorzugt kann für die rutschfeste Beschichtung eine ZweiKomponenten-Epoxidharzbeschichtung mit eingestreutem, ausgeglühtem, reinem Quarzsand verwendet werden.

Gemäß einem weitern Ausführungsbeispiel ist die Höhe, um die die Anschlagfläche aus der Unterseite der Tritt- und Arbeitsplattform herausragt, kleiner oder gleich einer Dicke der Tritt- und Arbeitsplattform im Bereich der Grundplatte. Vorteilhaft können solche Tritt- und Arbeitsplattformen mit paarweise aufeinanderliegenden Unterseiten gestapelt werden, ohne dass sich ein Quer oder Hochversatz des Stapels einstellt. Die jeweiligen Anschlagflächen überragen im gestapelten Zustand die jeweils benachbarte Platte nicht. Solche Tritt- und Arbeitsplattform können effizient und raumsparend transportiert und aufbewahrt werden.

### Kurzbeschreibung der Zeichnungen

Im Folgenden wird die Erfindung unter Bezugnahme auf die Zeichnungen weiter erläutert, wobei diese bevorzugte Ausführungsbeispiele der Erfindung zeigen. Es zeigt,
FIG. 1 eine vereinfachte perspektivische Ansicht einer Tritt- und Arbeitsplattform von deren Oberseite, gemäß einem Ausführungsbeispiel,
FIG. 2 eine vereinfachte perspektivische Ansicht dieser Tritt- und Arbeitsplattform von ihrer Unterseite,
FIG. 3 eine vereinfachte perspektivische Detailansicht einer Tritt- und Arbeitsplattform im Bereich der Arretierung, gemäß einem Ausführungsbeispiel,
FIG. 4 eine vereinfachte perspektivische Ansicht einer Tritt- und Arbeitsplattform von der Unterkante her, gemäß einem Ausführungsbeispiel,
FIG. 5 eine weitere vereinfachte perspektivische Ansicht einer Tritt- und Arbeitsplattform von der Oberkante her, gemäß einem Ausführungsbeispiel, und
FIG. 6 und 7 vereinfachte Ansichten mehrerer Tritt- und Arbeitsplattformen im praktischen Einsatz, wobei die Tritt- und Arbeitsplattformen beispielhaft auf eine Solaranlage aufgesetzt sind.

### Detaillierte Beschreibung

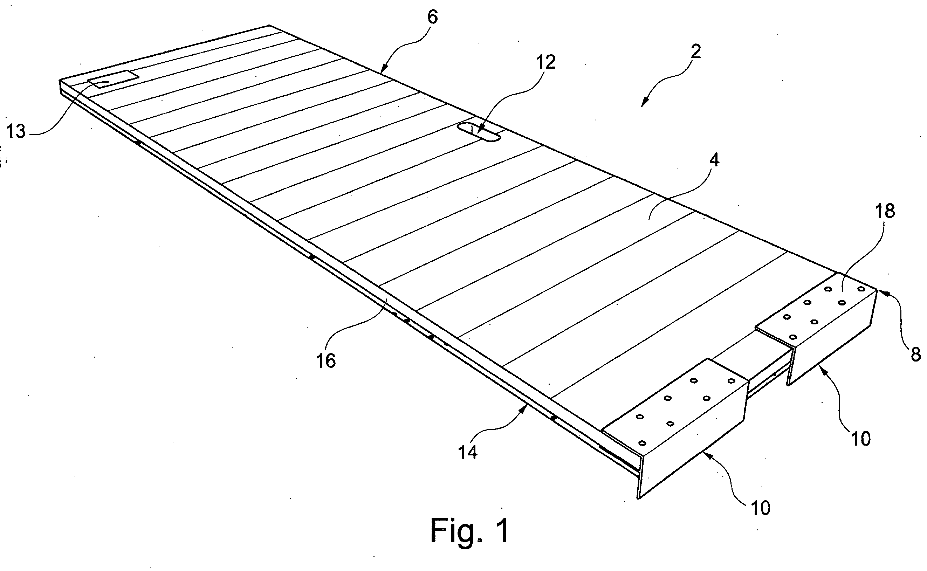

FIG. 1 zeigt eine vereinfachte perspektivische Ansicht einer Tritt- und Arbeitsplattform 2 von deren Oberseite 4, gemäß einem Ausführungsbeispiel. Die Tritt- und Arbeitsplattform 2 umfasst eine Grundplatte 6, welche in Aufsicht betrachtet rechteckförmig ist. Die Grundplatte 6 der Tritt- und Arbeitsplattform 2 besteht aus einem Hartschaummaterial, wobei beispielsweise eine glasfaserverstärkte Polyurethan-Hartschaumplatte (z. B. vom Typ: Thermo Lite Board Serie 2816) mit einer Stärke von 19 mm verwendet wird. Eine solche Hartschaumplatte besteht aus 85,6 % Polyurethan-Hartschaum und hat einen Anteil von 14,4 % Glasfasern. Selbstverständlich können auch Hartschaumplatten mit einer größeren Stärke verwendet werden, beispielsweise wenn diese für größere Belastungen ausgelegt werden sollen. Gemäß dem in FIG. 1 gezeigten Ausführungsbeispiel hat die Grundplatte 6 der Tritt- und Arbeitsplattform 2 eine Druckfestigkeit von 2,5% Verformung bei einer Belastung von 32 kg/cm². Die Biegefestigkeit liegt bevorzugt bei 377 kg/cm², die Streckspannung bei 302 kg/cm².

Die Tritt- und Arbeitsplattform 2 weist an einer oberen Kante 8, welche sich in einer Querrichtung der Grundplatte 6 erstreckt, eine Arretierung 10 auf. Diese Arretierung 10 besteht aus einem abschnittsweise an der oberen Kante 8 angebrachten Aluminium F-Profil mit einer Schenkellänge von bevorzugt 60 mm. In dem gezeigten Ausführungsbeispiel besteht die Arretierung 10 aus zwei separaten und entlang der oberen Kante 8 beabstandeten F-Profilstücken. Selbstverständlich kann auch ein durchgängiges Profil, welches sich entlang der kompletten oberen Kante 8 erstreckt, eingesetzt werden.

Die Oberseite 4 der Grundplatte 6 ist mit einer rutschfesten Beschichtung versehen, welche bevorzugt aus einer Zwei-Komponenten-Epoxidharzbeschichtung mit eingestreutem, ausgeglühtem, reinem Quarzsand besteht.

Um die Handhabung der Tritt- und Arbeitsplattform 2 zu erleichtern, weist diese einen in die Grundplatte 6 eingelassenen Griff 12 auf. In der Nähe einer unteren Kante der Grundplatte 6 befindet sich außerdem ein Typenschild 13.

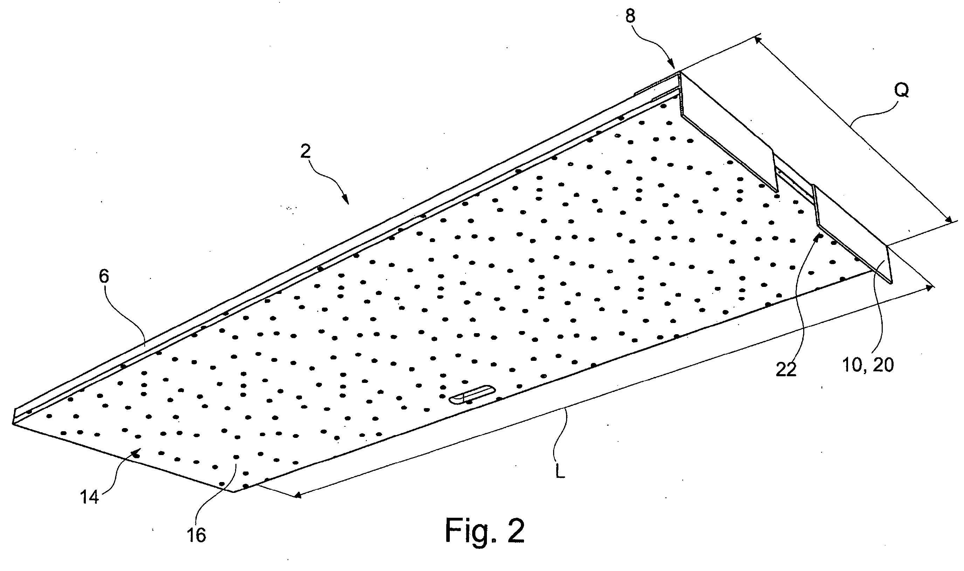

FIG. 2 zeigt die aus FIG. 1 bekannte Tritt- und Arbeitsplattform 2 in einer weiteren perspektivischen Ansicht von ihrer Unterseite 14. Bevorzugt hat die Tritt- und Arbeitsplattform 2 eine Länge L von 1502mm und eine quer dazu verlaufende Breite Q von 500 mm. Selbstverständlich können je nach Kundenwunsch auch andere Maße der Arbeitsplattform 2 realisiert werden.

Auf einer der Oberseite 4 gegenüberliegenden Unterseite 14, welche ebenfalls durch eine der Flachseiten der Grundplatte 6 gebildet ist, ist eine elastische Schicht 16 auf die Grundplatte 6 aufgebracht, welche beispielsweise aus einem Moosgummi besteht. Ein bevorzugtes Material für dieses Moosgummi ist Zellkautschuk vom Typ ZK100. Die elastische Schicht 16 ist mit der unteren Flachseite der Grundplatte 6 verklebt. Bevorzugt erstreckt sich die elastische Schicht 16 vollflächig auf der Unterseite 14 der Tritt- und Arbeitsplattform 2. Es ist jedoch ebenfalls möglich, die Unterseite 14 lediglich bereichsweise mit einer elastischen Schicht 16 zu versehen.

Die aus einem F-Profil bestehende Arretierung 10 weist neben den in FIG. 1 gut sichtbaren oberen Befestigungsschenkeln 18 Halteschenkel 20 auf, welche sich aus einer von der Grundplatte 6 aufgespannten Ebene in Richtung der Unterseite 14 der Tritt- und Arbeitsplattform 2 erstrecken, und eine Anschlagfläche 22 auf ihrer in FIG. 2 abgewandten Seite ausbilden. Diese Anschlagfläche 22 ist dafür vorgesehen, an einer oberen Kante eines Solarmoduls kraftschlüssig anzuliegen, so dass ein Abrutschen der Tritt- und Arbeitsplattform 2 wirksam vermieden werden kann.

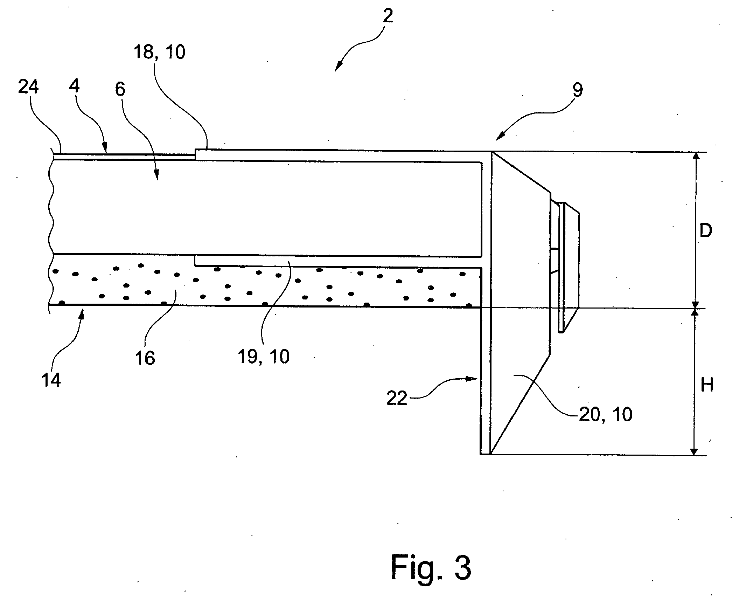

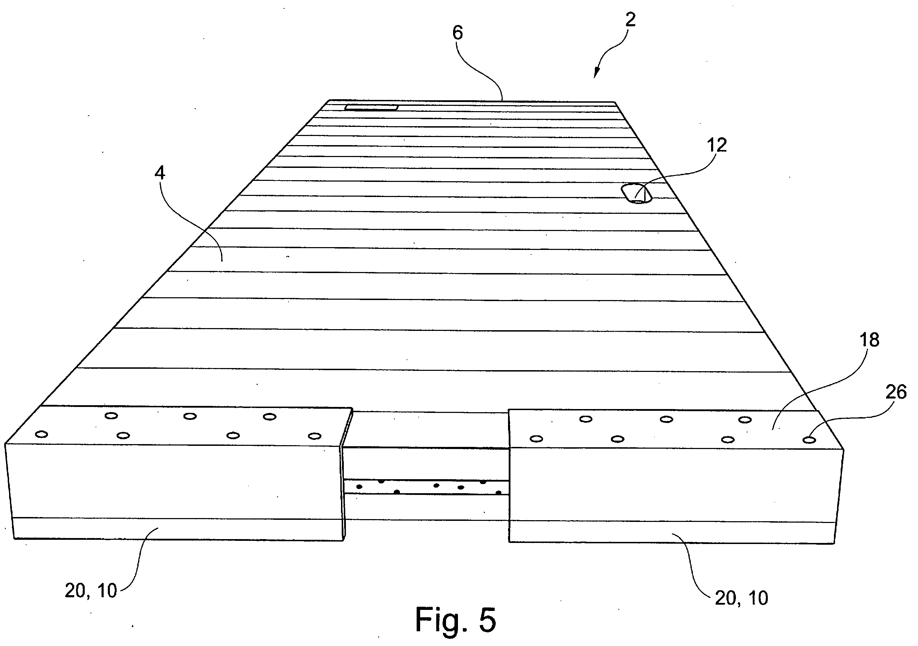

FIG. 3 zeigt eine vereinfachte perspektivische Detailansicht der Tritt- und Arbeitsplattform 2 im Bereich ihrer oberen Kante 8. Die aus einem F-förmigen Profil bestehende Arretierung 10 erstreckt sich entlang der oberen Kante 8 der Tritt- und Arbeitsplattform 2. Bevorzugt handelt es sich bei dem F-förmigen Profil um ein Aluminiumprofil. Es kann jedoch ebenso ein geeignetes Kunststoffprofil verwendet werden. Die aus dem F-Profil bestehende Arretierung 10 weist einen oberen Befestigungsschenkel 18 auf, welcher auf der Oberseite 4 der Grundplatte 6 aufliegt und abweichend von der Darstellung in FIG. 3 in diese eingelassen sein kann. Außerdem umfasst das F-Profil einen unteren Befestigungsschenkel 19, welcher auf einer unteren Flachseite der Grundplatte 6 aufliegt. Selbstverständlich kann auch dieser untere Befestigungsschenkel 19 abweichend von der Darstellung in die Grundplatte 6 eingelassen sein. Der obere und untere Befestigungsschenkel 18, 19 bilden ein U-Profil aus, in welches sich Grundplatte 6 hinein erstreckt. Die Arretierung 10 ist an der Grundplatte 6 in diesem Bereich befestigt. Bevorzugt werden Schrauben 26, z. B. Senkkopfschrauben (vgl. auch FIG. 5), welche von dem oberen Befestigungsschenkel 18 durch die Grundplatte 6 hindurch bis in den unteren Befestigungsschenkel 19 greifen, verwendet.

Die Arretierung 10, d. h. das F-Profil, weist außerdem einen Halteschenkel 20 auf, welcher sich im Wesentlichen senkrecht zu den Flachseiten der Grundplatte 6 erstreckt, sofern wie in FIG. 3 der betreffende Bereich der Tritt- und Arbeitsplattform 2 in einem Querschnitt betrachtet wird, welcher senkrecht zu der oberen Kante 8 verläuft. Der Halteschenkel 20 bildet eine Anschlagfläche 22, welche beim Einsatz der Tritt- und Arbeitsplattform 2 auf einem Solarmodul einer Solaranlage mit einer oberen Kante eines entsprechenden Solarmoduls kraft- und formschlüssig zum Anschlag kommt. Auf ihrer Unterseite 14 weist die Tritt- und Arbeitsplattform 2 die elastische Schicht 16 auf, welche bevorzugt aus Moosgummi besteht.

Die kraftschlüssig anliegende Anschlagfläche 22 verhindert gemeinsam mit der zwischen dem Moosgummi und der Oberfläche der Solarmodule auftretenden Haftreibung ein Abrutschen der Tritt- und Arbeitsplattform 2. Auf der Oberseite 4 der Tritt- und Arbeitsplattform 2 ist die Grundplatte 6 mit einer rutschfesten Beschichtung 24 versehen, welche bevorzugt aus einer Zwei-Komponenten-Epoxidharzbeschichtung mit eingestreutem Quarzsand besteht.

Wie der FIG. 3 zu entnehmen ist, hat das als Arretierung 10 dienende F-Profil bevorzugt eine Schenkellänge von 60 mm, wobei ein 2 mm starkes Aluminiumprofil verwendet werden kann. Die Stärke der als Grundplatte 6 verwendeten Hartschaumplatte beträgt bevorzugt 19 mm. Die auf der Unterseite 14 befindliche elastische Schicht ist bevorzugt 8 mm stark. Je nach Anforderung und Kundenwunsch können selbstverständlich andere Abmessungen zum Einsatz kommen.

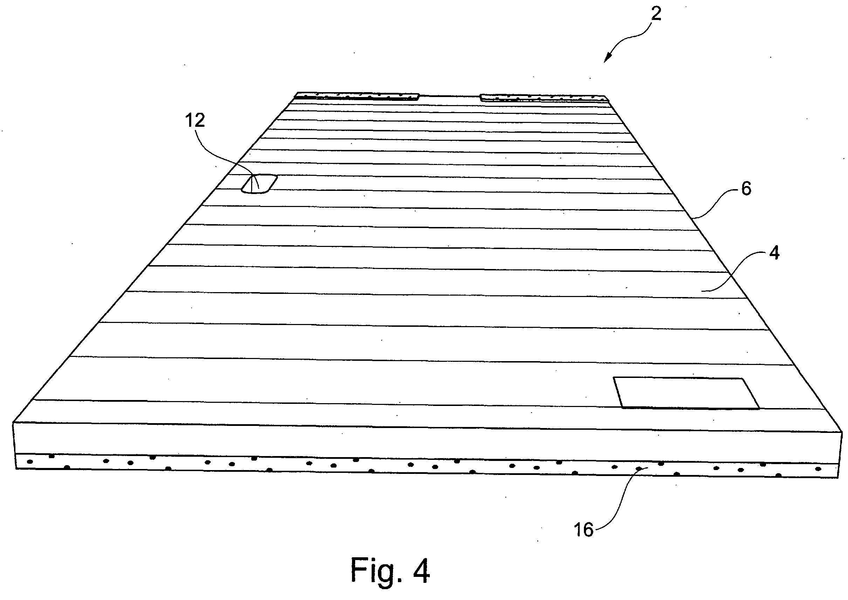

Weitere vereinfachte perspektivische Ansichten der Tritt- und Arbeitsplattform 2 sind in den FIG. 4 und 5 gezeigt. Dabei zeigt FIG. 4 die Tritt- und Arbeitsplattform 2 von ihrer unteren Kante her. FIG. 5 zeigt die Tritt- und Arbeitsplattform 2 in vereinfachter perspektivischer Ansicht auf ihre Oberkante.

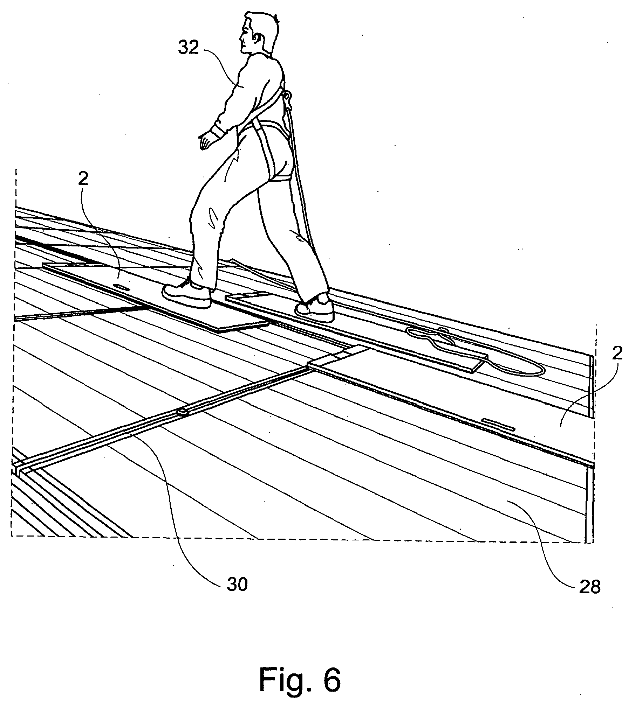

FIG. 6 zeigt eine vereinfachte perspektivische Ansicht mehrerer Tritt- und Arbeitsplattformen 2, welche auf Solarmodule 28 einer Solaranlage aufgesetzt sind. Die Arretierung 10 der Tritt- und Arbeitsplattformen 2 greift in einen zwischen den einzelnen Solarmodulen 28 der Solaranlage vorhandenen Spalt 30. Ein Benutzer 32 der Tritt- und Arbeitsplattformen 2 kann zwischen den einzelnen Tritt- und Arbeitsplattformen 2 hin und her schreiten. Durch Versetzen der einzelnen Tritt- und Arbeitsplattformen 2 kann er bequem jeden beliebigen Punkt der Solaranlage erreichen.

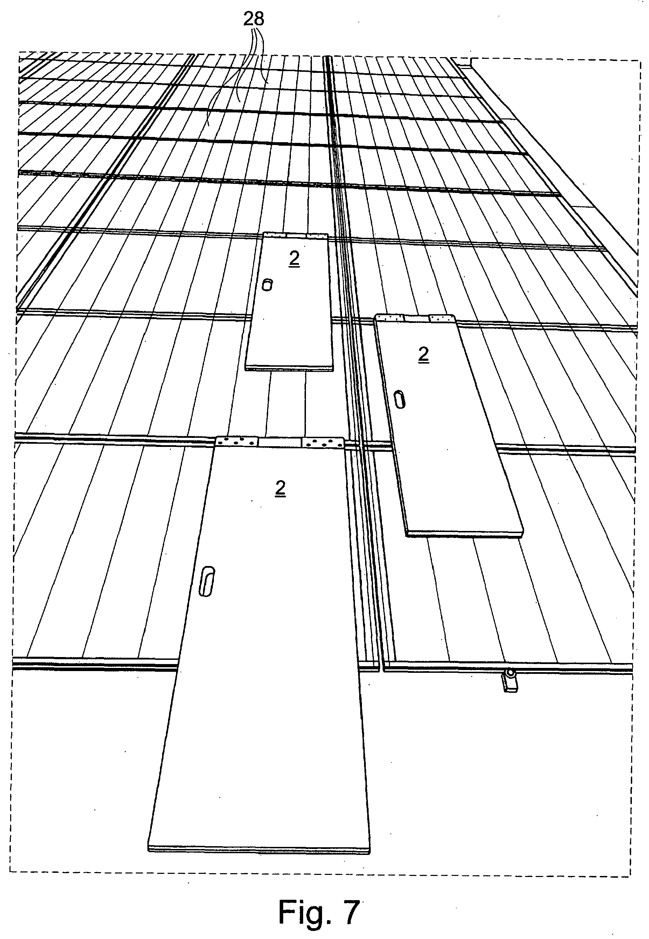

FIG. 7 zeigt eine weitere vereinfachte perspektivische Ansicht von auf die Solarmodule 28 einer Solaranlage aufgesetzten Tritt- und Arbeitsplattformen 2. Die Anschlagfläche 22 der Arretierung 10 der Tritt- und Arbeitsplattform 2 kommt mit einer oberen Kante der Solarmodule 28 der gezeigten Solaranlage kraft- und formschlüssig zum Anschlag, sodass die Tritt- und Arbeitsplattformen auch bei in einem schrägen Winkel montierten Solarmodulen nicht abrutschen können. Zum Schutz der Oberfläche der Solarmodule 28 und zur zusätzlichen Sicherung der Tritt- und Arbeitsplattformen dient die auf der Unterseite 14 der 2 angebrachte elastische Schicht 16.

### Bezugszeichenliste

- 2: Tritt- und Arbeitsplattform
- 4: Oberseite
- 6: Grundplatte
- 8: obere Kante
- 10: Arretierung
- 12: Griff
- 14: Unterseite
- 16: elastische Schicht
- 18: oberer Befestigungsschenkel
- 19: unterer Befestigungsschenkel
- 20: Halteschenkel
- 22: Anschlagfläche
- 24: rutschfeste Beschichtung
- 26: Schrauben
- 28: Solarmodule
- 30: Spalt
- 32: Benutzer
- L: Länge
- Q: Breite
- H: Höhe
- D: Dicke

## Patentansprüche

1. Tritt- und Arbeitsplattform (2) zur Auflage auf zumindest ein in einem schrägem Winkel montiertes Solarmodul (28) einer Solaranlage, umfassend eine Grundplatte (6) und eine daran angebrachte Arretierung (10) zur Sicherung der Tritt- und Arbeitsplattform (2) gegenüber dem Solarmodul (28), wobei sich die Arretierung (10) entlang einer Kante (8) der Grundplatte (6) erstreckt und eine aus einer von der Grundplatte (6) aufgespannten Ebene herausragende Anschlagfläche (22) aufweist, welche dafür vorgesehen ist an einer oben liegenden Kante des in schrägem Winkel montierten Solarmoduls (28) kraft- und formschlüssig zum Anschlag zu kommen, **dadurch gekennzeichnet dass** die Arretierung (10) eine sich zumindest abschnittsweise entlang der Kante (8) der Grundplatte (6) erstreckende Profilschiene umfasst und die Profilschiene, betrachtet in dem senkrecht zu der Kante (8) orientierten Querschnitt, ein F-Profil aufweist und ein U-förmiger Bereich dieses F-Profils zur Aufnahme der Grundplatte (6) dient und sich die Grundplatte (6) in diesen U-förmigen Bereich erstreckt, wobei das' F-Profil außerdem einen quer zu den Flachseiten der Grundplatte (6) orientierten Schenkel aufweist, durch welchen die Anschlagfläche (22) gebildet ist.

2. Tritt- und Arbeitsplattform (2) nach Anspruch 1, bei der zumindest eine der Flachseiten der Grundplatte (6) zumindest abschnittsweise eine elastische Schicht (16) aufweist.

3. Tritt- und Arbeitsplattform (2) nach Anspruch 2, bei die Anschlagfläche (22) in Richtung einer durch die Flachseite gebildeten Unterseite (14) der Grundplatte (6) aus der von der Grundplatte (6) aufgespannten Ebene herausragt und diese Unterseite (14) zumindest abschnittsweise mit der elastischen Schicht (16) versehen ist.

4. Tritt- und Arbeitsplattform (2) nach Anspruch 2 oder 3, wobei es sich bei der elastischen Schicht (16) um eine auf die Grundplatte (6) aufgeklebte Schicht aus Moosgummi handelt.

5. Tritt- und Arbeitsplattform (2) nach einem der Ansprüche 1 bis 4, bei der die Profilschiene in zumindest eine der Flachseiten der Grundplatte (6) eingelassen ist.

6. Tritt- und Arbeitsplattform (2) nach einem der Ansprüche 1 bis 5, bei der die Anschlagfläche (22) und die Flachseiten der Grundplatte (6), betrachtet in dem senkrecht zu der Kante (8) orientierten Querschnitt, im Wesentlichen einen rechten Winkel einschließen.

7. Tritt- und Arbeitsplattform (2) nach einem der vorhergehenden Ansprüche, bei der die Grundplatte (6) eine Hartschaumplatte ist.

8. Tritt- und Arbeitsplattform (2) nach Anspruch 7, bei der die Hartschaumplatte aus einem glasfaserverstärkten Polyurethan-Hartschaum ist.

9. Tritt- und Arbeitsplattform (2) nach einem der vorhergehenden Ansprüche, welche in einer Längsrichtung (L) größer ist als in einer quer dazu orientierten Querrichtung (Q), und die Arretierung (10) sich entlang einer in Querrichtung (Q) orientierten oberen Kante (8) der Grundplatte (6) erstreckt.

10. Tritt- und Arbeitsplattform (2) nach einem der vorhergehenden Ansprüche, bei der eine Flachseite der Grundplatte (6), welche nicht mit einer elastischen Schicht (16) versehen ist, zumindest abschnittsweise eine rutschfeste Beschichtung (24) aufweist.

11. Tritt- und Arbeitsplattform (2) nach einem der vorhergehenden Ansprüche, bei der eine Höhe (H), um die die Anschlagfläche (22) aus einer Unterseite (14) der Tritt- und Arbeitsplattform (2) herausragt, kleiner oder gleich einer Dicke (D) der Tritt- und Arbeitsplattform (2) im Bereich der Grundplatte (6) ist.

## Claims

1. A step and work platform (2) to be placed on at least one solar module (28), mounted at an oblique angle, of a solar power system, comprising a base plate (6) and a locking device (10) fastened thereto for securing the step and work platform (2) with respect to the solar module (28), the locking device (10) extending along an edge (8) of the base plate (6) and including a stop face (22) protruding from a plane spanned by the base plate (6), the stop face (22) being intended for coming to a stop with a force fit and an interference fit against a top edge of the solar module (28) mounted at the oblique angle, **characterized in that** the locking device (10) comprises a profile rail that extends along the edge (8) of the base plate (6) at least in sections, and the profile rail, as viewed in the cross-section oriented perpendicularly to the edge (8), has an F-profile, and a U-shaped portion of this F-profile serves to receive the base plate (6) and the base plate (6) extends into this U-shaped portion, the F-profile furthermore including a leg which is oriented transversely to the flat sides of the base plate (6) and forms the stop face (22).

2. The step and work platform (2) according to claim 1, in which at least one of the flat sides of the base plate (6) includes an elastic layer (16) at least in sections.

3. The step and work platform (2) according to claim 2, in which the stop face (22) protrudes from the plane spanned by the base plate (6) in the direction of a lower side (14), formed by the flat side, of the base plate (6), and this lower side (14) is provided with the elastic layer (16) at least in sections.

4. The step and work platform (2) according to claim 2 or 3, wherein the elastic layer (16) is a layer of microcellular rubber glued onto the base plate (6).

5. The step and work platform (2) according to any of claims 1 to 4, in which the profile rail is inset in at least one of the flat sides of the base plate (6).

6. The step and work platform (2) according to any of claims 1 to 5, in which the stop face (22) and the flat sides of the base plate (6), viewed in the cross-section oriented perpendicularly to the edge (8), include substantially a right angle.

7. The step and work platform (2) according to any of the preceding claims, in which the base plate (6) is a rigid foam board.

8. The step and work platform (2) according to claim 7, in which the rigid foam board is made from a glass fiber reinforced rigid polyurethane foam.

9. The step and work platform (2) according to any of the preceding claims, which is larger in a longitudinal direction (L) than in a transverse direction (Q) oriented transversely thereto, and in which the locking device (10) extends along an upper edge (8), oriented in the transverse direction (Q), of the base plate (6).

10. The step and work platform (2) according to any of the preceding claims, in which a flat side of base plate (6) which is not provided with an elastic layer (16) includes a non-slip coating (24) at least in sections.

11. The step and work platform (2) according to any of the preceding claims, in which a height (H) by which the stop face (22) protrudes from a lower side (14) of the step and work platform (2) is smaller than or equal to a thickness (D) of the step and work platform (2) in the region of the base plate (6).

## Revendications

1. Plateforme de marche et de travail (2) pour l'agencement sur au moins un module solaire (28) d'une centrale électro-solaire qui est monté selon un angle oblique, comportant une plaque de base (6) et un dispositif d'arrêt (10) monté sur celle-ci pour le blocage de la plateforme de marche et de travail (2) par rapport au module solaire (28), le dispositif d'arrêt (10) s'étendant le long d'une arête (8) de la plaque de base (6) et présentant une surface de butée (22) qui fait saillie d'un plan étendu par la plaque de base (6) et qui est destinée à venir en butée, par coopération de forces et de formes, sur une arête supérieure du module solaire (28) monté selon un angle oblique, **caractérisée en ce que** le dispositif d'arrêt (10) comporte un rail profilé qui s'étend au moins par tronçons le long de l'arête (8) de la plaque de base (6) et **en ce que** le rail profilé, vu en section transversale orientée perpendiculairement à l'arête (8), présente un profil en F, et **en ce qu'**une zone en forme de U de ce profil en F sert à recevoir la plaque de base (6) et la plaque de base (6) s'étend dans cette zone en forme de U, le profil en F présentant en outre une branche qui est orientée transversalement aux côtés plats de la plaque de base (6) et forme la surface de butée (22).

2. Plateforme de marche et de travail (2) selon la revendication 1, dans laquelle au moins l'un des côtés plats de la plaque de base (6) comporte au moins par tronçons une couche élastique (16).

3. Plateforme de marche et de travail (2) selon la revendication 2, dans laquelle la surface de butée (22) fait saillie du plan étendu par la plaque de base (6) en direction d'une face inférieure (14) de la plaque de base (6) formée par le côté plat, et dans laquelle cette face inférieure (14) est pourvue au moins par tronçons de la couche élastique (16).

4. Plateforme de marche et de travail (2) selon la revendication 2 ou 3, dans laquelle la couche élastique (16) est une couche de caoutchouc cellulaire collée sur la plaque de base (6).

5. Plateforme de marche et de travail (2) selon l'une des revendications 1 à 4, dans laquelle le rail profilé est encastré dans l'un au moins des côtés plats de la plaque de base (6).

6. Plateforme de marche et de travail (2) selon l'une des revendications 1 à 5, dans laquelle la surface de butée (22) et les côtés plats de la plaque de base (6), vus en section transversale orientée perpendiculairement à l'arête (8), renferment sensiblement un angle droit.

7. Plateforme de marche et de travail (2) selon l'une des revendications précédentes, dans laquelle la plaque de base (6) est une plaque de mousse rigide.

8. Plateforme de marche et de travail (2) selon la revendication 7, dans laquelle la plaque de mousse rigide est réalisée en une mousse de polyuréthane rigide renforcée de fibres de verre.

9. Plateforme de marche et de travail (2) selon l'une des revendications précédentes, laquelle est plus grande dans un sens longitudinal (L) que dans un sens transversal (Q) orienté transversalement à celui-ci, et dans laquelle le dispositif d'arrêt (10) s'étend le long d'une arête supérieure (8) de la plaque de base (6), qui est orientée dans le sens transversal (Q).

10. Plateforme de marche et de travail (2) selon l'une des revendications précédentes, dans laquelle un côté plat de la plaque de base (6) qui n'est pas pourvu d'une couche élastique (16) présente au moins par tronçons un revêtement antidérapant (24).

11. Plateforme de marche et de travail (2) selon l'une des revendications précédentes, dans laquelle une hauteur (H) sur laquelle la surface de butée (22) fait saillie d'une face inférieure (14) de la plateforme de marche et de travail (2) est inférieure ou égale à une épaisseur (D) de la plateforme de marche et de travail (2) dans la zone de la plaque de base (6).
